# DEMANDE DE BREVET EUROPEEN

(11) **EP 1 405 566 A2**
(43) Date de publication de la demande: **07.04.2004**
(21) Numéro de dépôt: 03292438.3
(22) Date de dépôt: 02.10.2003
(51) Int. Cl.: A23B 7/154, A23L 1/2165

(54) **Préparation et utilisation d'acide chlorogénique de pommes de terre**

(30) Priorité: 02.10.2002 FR 0212203
(71) Demandeur: Intersnack Knabber- Gebäck GmbH & Co. KG, 50858 Köln (DE); Bioval, 02130 Saponay (FR)
(72) Inventeur: Tricoit, Jean, 02200 Soisson (FR); Rousset, Gérard, 91320 Wissous (FR)
(74) Mandataire: Bernasconi, Jean Raymond

(57) **Abrégé**

L'invention concerne un procédé de préparation d'acide chlorogénique à partir de pommes de terre et l'utilisation d'acide chlorogénique pour prévenir ou inhiber les réactions de brunissement des pommes de terre après cuisson, en particulier des flocons de pommes de terre déshydratés.

## Description

La présente invention a trait à la préparation et à l'utilisation d'acide chlorogénique pour prévenir le brunissement des pommes de terre après cuisson. Conformément à la présente invention, l'acide chlorogénique est plus particulièrement utilisé comme anti-oxydant dans la fabrication de flocons de pommes de terre déshydratés.

Il est bien connu que la plupart des denrées telles que les fruits et les légumes, en particulier les pommes de terre, ont une tendance à brunir lors de périodes de stockage prolongées. Ce phénomène est souvent appelé « réaction de brunissement ». Bien que le produit bruni ne soit pas toxique et n'ait pas perdu sa valeur nutritionnelle, cette coloration lui donne néanmoins une apparence et un goût peu attractifs pour le consommateur. Les causes de ces réactions de brunissement ont fait l'objet d'études considérables et il est maintenant établi qu'une réaction enzymatique est principalement responsable de phénomène.

Le brunissement enzymatique des végétaux résulte de l'oxydation par l'oxygène moléculaire des composés phénoliques endogènes, tels que l'acide chlorogénique et la tyrosine, en quinones. Par la suite, ces quinones se polymérisent, provoquant l'apparition de pigments généralement bruns ou noirs. L'oxygène, les composés phénoliques et l'enzyme sont donc les trois facteurs essentiels nécessaires à la manifestation du brunissement. Ce phénomène ne se déclenche toutefois qu'après une décompartimentation cellulaire conduisant à la mise au contact des substrats phénoliques (vacuolaires) et du système enzymatique (cytoplasmique).

Certains fruits, comme le kiwi, n'ont pas tendance à brunir car ils n'ont pas ou peu de substrats. Les oranges ne brunissent pas à cause de la faible activité enzymatique au pH de ces fruits.

Chez la pomme de terre, on observe un brunissement enzymatique important si les surfaces du légume sont exposées à de l'oxygène avant cuisson. Une altération enzymatique est également observée dans les tubercules abîmés ou malades. Les polyphénol oxydases, notamment les phénolases, sont les principaux constituant du système enzymatique responsable de l'altération des substrats phénoliques en quinones ou autres composants qui peuvent réagir avec des acides aminés de manière similaire aux sucres pour produire des produits de la réaction de Maillard.

L'acide chlorogénique est un puissant anti-oxydant utilisé en industrie agro-alimentaire, à l'exclusion des industries de transformation des pommes de terre.

Il est en effet connu que les pommes de terre sont fortement sensibles à un brunissement après cuisson. Cette pigmentation est due à la formation d'un complexe entre les ions ferriques (Fe³⁺) et l'acide chlorogénique et/ou l'acide caféique, un produit d'hydrolyse de l'acide chlorogénique. Dans les pommes de terre fraîchement cuites, un complexe incolore fer ferreux (Fe2+)-acide chlorogénique se forme avant d'être ensuite oxydé à l'air en complexe coloré fer ferrique - acide chlorogénique.

Du fait de la forte teneur en fer des pommes de terre, l'utilisation d'acide chlorogénique pour prévenir le brunissement des pommes de terre n'a jamais été envisagée.

Les auteurs de la présente invention ont maintenant trouvé de manière inattendue que l'acide chlorogénique peut être utilisé pour prévenir ou inhiber le brunissement des pommes de terre après cuisson.

Sans vouloir se lier à un mécanisme précis, ils ont remarqué que l'introduction d'acide chlorogénique, en particulier sous forme d'émulsion froide, au moment du passage au presse-purée permet de protéger les pommes de terre de l'oxydation au moment de la phase finale de séchage.

L'invention concerne donc l'utilisation d'acide chlorogénique pour prévenir ou inhiber les réactions de brunissement des pommes de terre après cuisson. Préférentiellement, l'acide chlorogénique est utilisé au cours de la fabrication de flocons de purée de pommes de terre déshydratés, notamment lors du passage au presse-purée. L'étape de pressage est une opération réalisée à environ 96°C, une température à laquelle les enzymes, notamment les polyphénol oxydases, susceptibles de transformer l'acide chlorogénique en quinones sont dénaturées. D'autre part le pressage est une opération très rapide (environ trois minutes). La complexation de l'acide chlorogénique puis l'oxydation du complexe formé n'aurait donc pas le temps d'avoir lieu. L'acide chlorogénique assure également un rôle d'anti-oxydant au cours de la phase finale de séchage, avant l'empaquetage des flocons de purée de pommes de terre déshydratés sous azote. Préférentiellement l'acide chlorogénique est utilisé en combinaison avec de la lécithine, sous forme d'émulsion froide, comme expliqué ci-dessous.

L'invention fournit ainsi un procédé de fabrication de flocons de purée de pommes de terre déshydratés, dans lequel on ajoute de l'acide chlorogénique comme anti-oxydant. En particulier, l'acide chlorogénique peut être ajouté aux pommes de terre après cuisson, en particulier dans des conditions permettant d'empêcher la complexation de l'acide chlorogénique par le fer et/ou l'oxydation des complexes ainsi formés.

Ces conditions consistent notamment à utiliser de l'acide chlorogénique exempt de fer et d'enzymes, telles que les polyphénol oxydases, qui contribuent à l'oxydation de l'acide chlorogénique.

Ces conditions consistent également à utiliser l'acide chlorogénique sous forme d'émulsion froide.

D'une manière générale, l'acide chlorogénique est avantageusement ajouté sous forme d'une solution froide, c'est à dire à température ambiante, par exemple à une température comprise entre 15 et 25°C, de manière à éviter de dénaturer l'acide chlorogénique.

Préférentiellement, l'acide chlorogénique est ajouté sous forme d'émulsion froide avec d'autres additifs, par exemple un agent émulsifiant tel que la lécithine, usuellement utilisés dans le domaine. Les inventeurs ont en effet mis en évidence que la combinaison de l'acide chlorogénique avec la lécithine permet de potentialiser l'effet antioxydant de l'acide chlorogénique.En plus de ses propriétés émulsifiantes, la lécithine présente également des propriétés antioxydantes et pourrait donc protéger l'acide chlorogénique de l'oxydation au cours de son utilisation. Toute lécithine, quelle que soit sa source (soja, tournesol, colza, etc...) est appropriée pour la mise en oeuvre de l'invention.

En outre, comme décrit plus haut, l'opération de pressage pour former la purée de pommes de terre est très rapide. La durée habituelle de cette opération est d'environ 3 minutes.

Un procédé selon l'invention comprend les étapes consistant à :
- nettoyer et éplucher des pommes de terre,
- trancher et/ou blanchir et refroidir lesdites pommes de terre,
- faire cuire les pommes de terre lavées, tranchées et/ou blanchies de manière à permettre un passage au presse-purée,
- passer au presse-purée les pommes de terre ainsi cuites, et
- déshydrater et transformer en flocons la purée ainsi obtenue ;
dans lequel de l'acide chlorogénique est ajouté entre l'étape de cuisson et l'étape de passage au presse-purée.

Préférentiellement l'acide chlorogénique provient des eaux de coupe et/ou de blanchiment des pommes de terre et/ou de la mélasse et/ou de la purée râclée qui sont des sous-produits issus du procédé de fabrication de flocons de purée déshydratée. Il peut également s'agir d'acide chlorogénique de synthèse ou extrait d'autres végétaux.

Par « mélasse », on désigne le déchet sous forme de bouillie visqueuse obtenu par brossage des pommes de terre après pelage à la vapeur. La mélasse contient un mélange de peau des pommes de terre et d'amidon cuit et cru.

Par « purée râclée », on entend la purée séchée récupérée sur les satellites équipant tous les cylindres sécheurs de pomme de terre.

L'acide chlorogénique est avantageusement ajouté dans une proportion comprise entre 0,01 % et 0,1 % par rapport au poids de matière sèche de pommes de terre. Préférentiellement l'acide chlorogénique est ajouté en combinaison avec de la lécithine. Avantageusement, cet ajout est effectué sous forme d'une émulsion froide comprenant entre 1 % et 10 % de lécithine, préférentiellement entre 3 % et 5 %, et entre 0,01 % et 0,1 % d'acide chlorogénique, par rapport au poids de matière sèche de pommes de terre. Cette composition émulsifiante peut également comprendre au moins 0,05 %, préférentiellement entre 0,1 % et 0,2 % en poids par rapport au poids de matière sèche de pommes de terre, d'un glycolipide dérivé d'un végétal tel qu'un di/trigalactoglycéride, comme décrit dans la demande de brevet français FR0202492.

La présente invention concerne donc également les flocons de purée de pommes de terre déshydraté susceptible d'être obtenus par un procédé décrit ci-dessus.

L'invention concerne par ailleurs une composition émulsifiante comprenant, en poids par rapport au poids de matière sèche de pommes de terre, 1 % à 10 % de lécithine, préférentiellement 3 % à 5 %; 0,01 % à 0,1 % d'acide chlorogénique; et éventuellement au moins 0,05 %, préférentiellement 0,1 % à 0,2 %, de di/trigalactoglycéride.

L'invention propose en outre un procédé de préparation d'acide chlorogénique à partir d'eaux de coupe et/ou de blanchiment de pommes de terre. Un tel procédé est particulièrement avantageux puisqu'il constitue une valorisation des eaux usagées issues de la transformation des pommes de terre, et qu'il permet en outre de fournir de l'acide chlorogénique avec une pureté minimale de 90%, ceci alors que l'acide chlorogénique commercial est extrêmement coûteux et de plus partiellement oxydé.

Le procédé de préparation d'acide chlorogénique selon l'invention comprend l'étape consistant à réaliser une adsorption de l'acide chlorogénique sur un support solide ne retenant pas les minéraux, et plus généralement les cations. Cette étape permet de séparer l'acide chlorogénique des minéraux et des enzymes qui lui sont associés, ainsi que du fer présent avec une haute teneur dans la pomme de terre. L'acide chlorogénique ainsi préparé est donc exempt de fer et d'enzymes telles que les polyphénol oxydases, les deux éléments qui contribuent à l'oxydation de l'acide chlorogénique et aux réactions de brunissement des pommes de terre.

Un support solide approprié est par exemple la polyvinylpyrrolidone (pvp). D'autres exemples de supports solides pouvant être utilisés pour la mise en oeuvre de l'invention sont bien connus de l'homme de l'art.

### EXEMPLE 1: Utilisation d'acide chlorogénique comme anti-oxydant dans un procédé de préparation de flocons de pommes de terre déshydratés

On ajoute de l'acide chlorogénique dans la solution d'émulsification qui est introduite dans le dispositif presse-purée à raison de 0,01 % à 0,1 % en poids par rapport au poids de matière sèche.

Puis on ajoute 18 à 25 kg de monostéarate de glycérol fondu, environ 4 kg de pyrophosphate acide de sodium, 0,5 à 2 kg d'acide citrique et 0,5 à 2 kg de métabisulfite dissout dans 3 à 5 l d'eau, ainsi que de l'acide ascorbique et un antioxydant tel le BHA. On agite ensuite pendant 2 minutes.

Les ingrédients mélangés sont pompés dans le cylindre presse-purée avec un débit de 30 l/h pour un petit cylindre (1.000 kg/h de pommes de terre épluchées correspondant à 180 kg/h de flocons déshydratés) ou 90 l/h pour un gros cylindre (3.500 kg/h de pommes de terre épluchées correspondant à 660 kg/h de flocons déshydratés), tout en continuant à agiter doucement.

### EXEMPLE 2: Purification d'acide chlorogénique à partir des eaux de coupe ou des eaux de blanchiment de pommes de terre

Les procédés de préparation de flocons de pommes de terre déshydratés mettent en oeuvre un blanchiment des pommes de terre tranchées, préalablement à leur cuisson. Cette étape de lavage par de l'eau chaude à 80°C génère des eaux usagées, ou eaux de blanchiment, qui contiennent principalement de l'amidon, de l'amylose et de l'amylopectine, ainsi que de l'acide chlorogénique (environ 2% de l'extrait sec des ces eaux de blanchiment).

Les eaux résiduelles produites au moment de l'étape de tranchage/lavage des pommes de terre ("eaux de coupe"), au cours de la production de flocons de purée déshydratés ou d'autres produits dérivées de pommes de terre comme les chips, peuvent également être valorisées comme source d'acide chlorogénique.

L'acide chlorogénique peut être purifié à partir de ces eaux de coupe ou de blanchiment par adsorption sur polyvinylpyrrolidone (pvp).

L'acide chlorogénique est fixé par adsorption sur pvp, sous sa forme insoluble dans l'eau (pvp ou POLYCLAR AT).

La polyvinylpyrrolidone se présente sous la forme d'un polymère possédant des sites électrophiles et nucléophiles, capable de former des liaisons avec de nombreux constituants et en particulier avec les composés phénoliques. Ces derniers sont adsorbés avec des mécanismes différents suivant leur structure et leur degré de condensation.

La liaison hydrogène entre un proton phénolique et l'oxygène du groupement carbonyle de la pyrrolidone paraît comme le mécanisme principal permettant l'adsorption. Pour leur étude, les auteurs de l'invention ont utilisé de la pvp préalablement purifiée afin d'éliminer les fines particules et les ions métalliques. Le fractionnement se déroule par percolation dans une colonne. La pvp est mélangée à 50 % avec de la CELITE pour faciliter l'écoulement. Au cours du passage des eaux de coupe, les composés phénoliques sont totalement adsorbés, les sels les sucres et les acides organiques ne sont pas retenus. Une percolation d'eau permet de laver parfaitement la résine, il n'y a plus alors dans la colonne qu'un complexe « pvp-acide chlorogénique ».

Pour désorber sélectivement l'acide chlorogénique, différents solvants hydroalcooliques peuvent être utilisés. Le solvant le mieux adapté est constitué par le mélange éthanol-eau-acide chlorhydrique (70-30-1). Il permet une bonne désorption. Pour récupérer les composés phénoliques toujours fixés sur la résine, de la soude décinormale peut être utilisée. La solution d'acide chlorogénique obtenue est d'abord neutralisée à pH 7, puis concentrée sous vide afin d'obtenir une solution concentrée d'acide chlorogénique. L'acide chlorogénique est alors purifié par recristallisation dans l'eau chaude et cristallisé à 4°C. Les cristaux d'acide chlorogénique sont séchés dans une étuve sous vide afin d'obtenir de l'acide chlorogénique sous forme de poudre. Si la pureté de l'acide chlorogénique fabriquée est insuffisante, une deuxième recristallisation dans l'eau chaude permet d'obtenir la pureté souhaitée.

L'acide chlorogénique ainsi obtenu se présente sous la forme d'une poudre blanche de faible odeur, ayant un extrait sec de 92 ± 4% et une pureté minimale de 90% (analyse HPLC). L'acide chlorogénique est soluble à 4% dans l'eau à 20°C. Il est également soluble dans l'alcool mais peu soluble dans les huiles. Le pH d'une solution d'acide chlorogénique à 1 % dans l'eau est 5,0.

## Revendications

1. Utilisation d'acide chlorogénique pour prévenir ou inhiber les réactions de brunissement des pommes de terre après cuisson.

2. Utilisation selon la revendication 1, pour prévenir ou inhiber les réactions de brunissement au cours de la fabrication de flocons de purée de pommes de terre déshydratés.

3. Utilisation selon la revendication 1 ou 2, dans laquelle l'acide chlorogénique est utilisé en combinaison avec de la lécithine.

4. Procédé de fabrication de flocons de purée de pommes de terre déshydratés, comprenant l'addition d'acide chlorogénique aux pommes de terre après cuisson.

5. Procédé selon la revendication 4, comprenant les étapes consistant à :
- nettoyer et éplucher des pommes de terre,
- trancher et/ou blanchir et refroidir lesdites pommes de terre,
- faire cuire les pommes de terre lavées, tranchées et/ou blanchies de manière à permettre un passage au presse-purée,
- passer au presse-purée les pommes de terre ainsi cuites, et
- déshydrater et transformer en flocons la purée ainsi obtenue ;
dans lequel de l'acide chlorogénique est ajouté entre l'étape de cuisson et l'étape de passage au presse-purée.

6. Procédé selon la revendication 4 ou 5, dans lequel l'acide chlorogénique est ajouté dans une proportion comprise entre 0,01 % et 0,1 % par rapport au poids de matière sèche de pommes de terre.

7. Procédé selon l'une quelconque des revendications 4 à 6, dans lequel l'acide chlorogénique est ajouté en combinaison avec de la lécithine.

8. Procédé selon l'une quelconque des revendications 4 à 7, dans lequel l'acide chlorogénique provient des eaux de coupe et/ou de blanchiment des pommes de terre et/ou de la mélasse et/ou de la purée râclée.

9. Flocon de purée de pommes de terre déshydraté susceptible d'être obtenu par le procédé de l'une des revendications 4 à 8.

10. Procédé de préparation d'acide chlorogénique à partir d'eaux de coupe et/ou de blanchiment de pommes de terre et/ou de la mélasse et/ou de la purée râclée comprenant l'étape consistant à réaliser une adsorption de l'acide chlorogénique sur un support solide ne retenant pas les cations.

11. Composition émulsifiante comprenant, en poids par rapport au poids de matière sèche de pommes de terre, 1 % à 10 % de lécithine; 0,01 % à 0,1 % d'acide chlorogénique; et éventuellement au moins 0,05 % de di/trigalactoglycéride.
